# EUROPEAN PATENT SPECIFICATION

(11) **EP 4 368 560 B1**
(45) Date of publication and mention of the grant of the patent: **12.03.2025**
(21) Application number: 22206577.3
(22) Date of filing: 10.11.2022
(51) Int. Cl.: B66C 23/20

(54) **A SECURING ASSEMBLY FOR SECURING A SUPPORT TOWER TO A WIND TURBINE TOWER AND A LIFTING SYSTEM INCLUDING THE SECURING ASSEMBLY**
BEFESTIGUNGSANORDNUNG ZUR BEFESTIGUNG EINES STÜTZTURMS AN EINEM WINDTURBINENTURM UND HUBSYSTEM MIT DER BEFESTIGUNGSANORDNUNG
ENSEMBLE DE FIXATION POUR FIXER UNE TOUR DE SUPPORT À UNE TOUR D'ÉOLIENNE ET SYSTÈME DE LEVAGE COMPRENANT L'ENSEMBLE DE FIXATION

(43) Date of publication of application: 15.05.2024
(73) Proprietor: Skyrex AB, 405 19 Göteborg (SE)
(72) Inventor: Strandberg, Michael, SE-722 26 Västerås (SE)
(74) Representative: Swea IP Law AB

(56) References cited:
- EP-A1- 3 725 731
- EP-A1- 3 812 337

## Description

### Technical field

The present invention relates to a securing assembly for securing a support tower to a wind turbine tower. The present invention also relates to lifting systems for lifting components to an elongated building comprising the securing assembly. The lifting system can, for example, be used to lift components to a wind turbine tower.

### Background

Wind turbines require regular maintenance of its main components, such as rotor blades, gear boxes and generators. However, these components are often large and heavy, which poses an issue during both the assembly and the maintenance of the wind turbine towers. Large wind turbine towers are built by assembling by stacking many conical tower elements on top of each other. Wind turbine towers today can be made higher than ever, with possible heights of over 200 meters. This places high demands on the lifting systems used to lift tower elements during assembly and maintenance of the wind turbine tower and its components.

Lifting systems for assembling and maintaining wind turbine towers can also be used to assemble and perform maintenance on other elongated buildings.

EP3812337A1 discloses a lifting system for performing work on an elongated structure, such as a wind turbine tower. The system comprises tower segments to be stacked to form an elongated vertical tower, a base frame arranged to stack tower segments from below, a jib in a top part of the vertical tower, a plurality of securing assemblies for securing the tower to the elongated structure and fastening arrangements for attaching the securing assemblies to a tower segment at a desired height.

EP3725731A1 discloses a securing assembly for securing an elongated support tower to a wind turbine tower according to the preamble of claim 1.

The securing assembly comprises a base part including a tower holding part, a fixed part fixedly connected to the tower holding part and two arms. The securing assembly comprises a rope attached to the base part for surrounding the wind turbine tower. The rope being arranged via a rope tightening device arranged on the base part. The rope is to apply a high contact force on the surface of a wind turbine tower by tightening the rope. The rope is used to assist the arms in clamping the wind turbine tower. The rope tightening device is used to tighten the rope around the wind turbine tower and thus more tightly securing the securing assembly to the wind turbine tower.

When the rope is in use, it is subjected to great forces, typically more than 200 kN. Before the rope is tightened, it must be attached to the securing assembly. This is, for example, done by knots. However, the great forces acting on the rope, causes wear on the knots so that the rope may break. Another problem with the knots is that it is difficult to untie the knots after they have been subjected to the forces.

Another problem is that the width of the wind turbine tower tapers toward the upper end of the tower. For example, the diameter of a wind turbine tower can be about 10 m at the bottom of the tower and about 3 m at the top of the tower. During the assembly of the wind turbine tower, the securing assemblies are moved upwards from one position to another along the tower. This means that the length of the rope needed to surround the tower varies. More rope is needed to surround the tower when the securing assembly is attached to a lower portion of the tower than when the securing assembly is attached to a higher portion of the tower. The rope must be dimensioned for the largest possible width. This creates problems with collecting and storing the excess part of the rope, which is not in use. Typically, the excess part of the rope can be up to 10 - 12 m.

### Summary

It is an aim of the present invention to provide an improved securing assembly for securing a support tower to a wind turbine tower, which at least partly solves the above problems.

This aim is achieved by a securing assembly as defined in claim 1.

The securing assembly comprises a base part and a fastening module for securing the support tower to the wind turbine tower, wherein the fastening module comprises a rope for surrounding the wind turbine tower, and an arm comprising an inner portion attached to the base part and an outer portion provided with a rope sliding element arranged to slidably hold the rope. Each end of the rope is provided with an eye end. The at least one arm is provided with a plurality of knobs arranged spaced apart along the arm for receiving the eye ends of the rope and for supporting the rope.

The eye ends of the rope and the knobs make it easy to fasten the rope to the securing assembly before the rope is tightened and easy to remove the rope from the securing assembly after the rope has been untightened. Thus, knots are avoided. Further, by arranging a plurality of knobs along the arm, it is possible to select a knob in dependence of the present amount of excess rope so that the excess rope extends along the arm. Thus, it is possible to adjust how much excess rope is stored on the arm by selecting knobs at different distances from the rope sliding element. Further, the knobs also function as support elements for supporting the excess rope when it is positioned along the arm. The knobs and the arm work as a rope storage for storing excess rope. For example, if there is little excess rope, it is possible to select knobs on the outer portion of the arm, close to the rope sliding element, and if there is a lot of excess rope, it is possible to select knobs on the inner portion of the arm, further away from the rope sliding element. The excess rope rests on the other knobs when the rope extends along the arm to the knob, which has received the eye end of the rope.

Since both ends of the rope are provided with an eye end, it is possible to adjust the distances between the ends of the rope and the sliding element. Accordingly, the length of excess rope, which is possibly to stored is increased compared to when only one of end of the rope is provided with an eye end.

With the term "eye end" is meant an attachment point arranged in one end of the rope to allow the rope to be attached to the knob. Typically, the end of the rope is provided with an opening for receiving the knob. The size of the opening depends on the size and shape of the knob.

With the term "knob" is meant a device to which the eye ends of the rope can be attached. Typically, the knob is protruding from the arm and is designed so that the eye end is prevented from slipping off the knob.

With the term "rope sliding element" is meant an element which slidably attaches the rope to the arm. The rope sliding element guides the rope when the rope is tightened around the wind turbine tower. Typically, the rope sliding element holds the rope in a vertical position and allows the rope to slide relative to the arm in a horizontal direction.

According to an embodiment of the invention, each knob comprises a leg for supporting the rope when the rope is arranged along the arm, and the leg is provided with a protruding part that prevents the eye end from slipping off the knob. The leg can be fixedly connected to the arm, or movably connected to the arm. Preferably, the leg is arranged perpendicular to the longitudinal direction of the arm. This type of knob is simple, inexpensive, and easy to mount.

According to an embodiment of the invention, the knobs are arranged spaced apart along the arm on two opposite sides of the arm. Each of the two opposite sides of the arm is provided with a row of spaced apart knobs arranged along the arm for receiving the eye ends of the rope and for supporting the rope. By arranging knobs on two opposite sides of the arm, the length of the excess rope possible to store is essentially increased.

According to an embodiment of the invention, the knobs on opposite sides of the arm are aligned to form pairs of knobs, and each pair of knobs shares a common leg extending between the two opposite sides of the arm. This embodiment increases the strength of the knobs and makes it possible to handle larger forces on the rope.

According to an embodiment of the invention, the knobs are movably attached to the arm so that the knobs are movable relative to the arm in the longitudinal direction of the arm. Thus, the knobs can be used to stretch the rope. The knobs can be moved away from the rope sliding element after the eye ends of the rope have been put on the knobs so that the rope is tightened. The rope can be untightened by moving the knobs closer to the rope sliding element.

According to an embodiment of the invention, the arm comprises an envelope defining an interior space of the arm, and an elongated member disposed in the interior space of the arm, wherein the knobs are attached to the elongated member, and the envelope is provided with openings designed so that the knobs protrude through the openings. The elongated member increases the strength of the knobs and makes it possible to handle larger forces on the rope.

According to an embodiment of the invention, the openings are elongated in the longitudinal direction of the arm, and the elongated member is arranged movable relative to the arm in the longitudinal direction of the arm. Thus, the rope can be tightened and untightened by moving the elongated member inside the arm.

According to an embodiment of the invention, the arm comprises a mechanism for moving the elongated member and this mechanism is arranged inside the envelope of the arm. When the mechanism is arranged inside the envelope of the arm, the mechanism is protected against the elements, such as rain and dirt.

Thus, the envelope protects the mechanism for moving the elongated member. The mechanism for moving the elongated member is, for example, a hydraulic piston or a screw jack.

According to an embodiment of the invention, each of the opposite sides of the arm is provided with at least 3 knobs, preferably at least 5 knobs, and most preferably at least 8 knobs. The more knobs the arm is provided with, the more excess rope can be stored. Preferably, the knobs are arranged along the whole length of the arm.

According to an embodiment of the invention, the distance between the knobs is between 0.3 and 0.7m.

According to an embodiment of the invention, the length of the arm is at least 3 m, preferably at least 4 m, and most preferably at least 5 m. The longer the arm, the more knobs can be arranged along the arm, and the more length of excess rope can be stored.

According to an embodiment of the invention, the fastening module comprises a second rope having each end provided with an eye end, and a second arm having an inner part attached to the base part and an outer portion comprising a rope sliding element arranged to slidably hold the second rope, the first and second arms are arranged on opposite sides of the base part for clamping the wind turbine tower, and the second arm is provided with a plurality of knobs arranged space apart along the second arm for receiving the eye ends of the second rope and for supporting the second rope. Two ropes increase the strength of the fastening module and provide redundance, which increases safety of the securing assembly. Using two ropes instead of one, makes is possible to take up larger forces.

According to an embodiment of the invention, the knobs are arranged spaced apart along the second arm on two opposite sides of the arm.

According to an embodiment of the invention, the securing assembly comprises a rope tightening device for tightening the rope when the rope surrounds the wind turbine tower.

According to an embodiment of the invention, the rope tightening device comprises a movable element arranged to hold the rope and arranged linearly movable back and forth with respect to the base part so that the rope is tightened and untightened in dependence on the movement of the movable element. The rope is tightened around the wind turbine tower when the movable element is moved away from the wind turbine tower, and the rope is untightened when the movable element is moved towards the wind turbine tower. Thus, it is easy to control the tightening and untightening of the rope by controlling the movements of the movable element.

According to an embodiment of the invention, the movable element is operated by means of a hydraulic cylinder. This is a simple and cost-effective manner of moving the movable element. Further, it is possible to control the tightening of the rope with high accuracy.

According to an embodiment of the invention, the movable element is disposed inside the arm and is arranged movable relative to the arm in the longitudinal direction of the arm. The movable element is, for example, the previously mentioned elongated member provided with the knobs.

Another aim of the present invention to provide an improved lifting system for lifting components to an elongated building, such as a wind turbine tower.

This aim is achieved by a lifting system as defined in claim 15.

The lifting system comprises a support tower, a jib arranged on top of the support tower for lifting components to the wind turbine tower, and a plurality of securing assemblies for securing the support tower to the wind turbine tower. Each of the securing assemblies comprises a tower holding part that holds the securing assemblies to the support tower and a fastening module for securing the securing assembly to the wind turbine tower. The securing assemblies comprises at least one securing assembly according to the invention.

### Brief description of the drawings

The invention will now be explained more closely by the description of different embodiments of the invention, and with reference to the appended figures.
Fig. 1 shows an example of a securing assembly according to the invention in a view from above.
Fig. 2 shows an example of a rope provided with eye ends.
Fig. 3 shows an enlarged view of the arm in figure 1.
Fig. 4 shows an enlarged view of a part of the arm in figure 1.
Fig. 5 shows a second example of the securing assembly in a view from above.
Fig. 6 shows the securing assembly in figure 5 in a perspective view.
Fig. 7 shows a third example of the securing assembly in a perspective view.
Fig. 8 shows the third example of the securing assembly in a view from above.
Fig. 9 shows a part of the interior space in the arm of the third example of the securing assembly in a perspective view.
Fig. 10 shows a part of the interior space in the arm of the third example of the securing assembly in a view from above.
Fig. 11 shows an example of a lifting system including a securing assembly according to the invention.

### Detailed description

Aspects of the present disclosure will be described more fully hereinafter with reference to the accompanying drawings. The securing assembly can, however, be realized in many different forms and should not be construed as being limited to the aspects set forth herein. Like numbers in the drawings refer to like elements throughout.

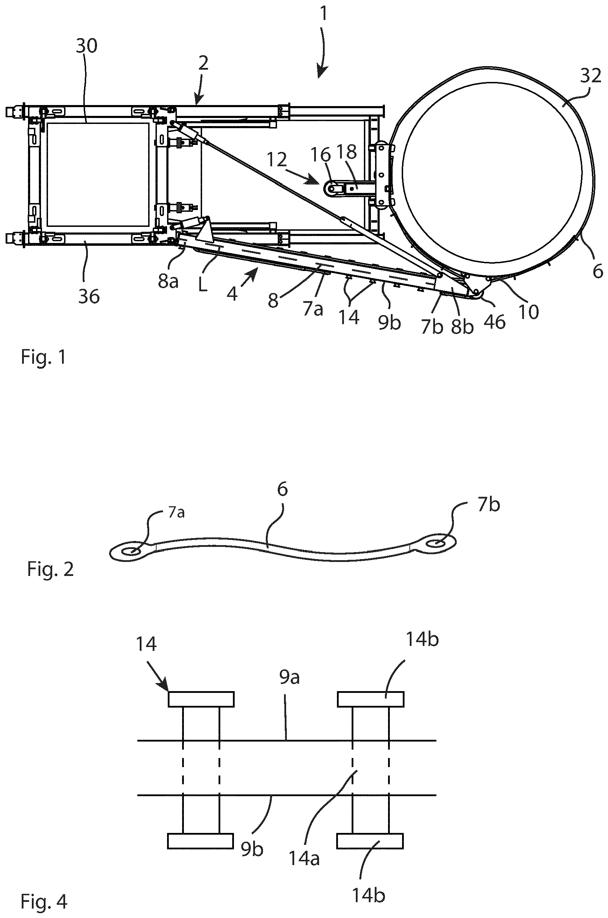

Figure 1 shows a first example of a securing assembly 1 for securing a support tower 30 to a wind turbine tower 32, in a view from above. The securing assembly 1 comprises a base part 2 and a fastening module 4 for securing the support tower to the wind turbine tower 32. The base part 2 comprises a tower holding part 36 that holds the securing assemblies 1 to the support tower 30. The tower holding part 36 may be an arrangement for fastening the securing assembly 1 to the support tower 30 on a side of the support tower 30 facing the wind turbine tower 32. In this example, the tower holding part 36 comprises an opening for receiving the support tower 30. The securing assembly 1 is thus attached to the support tower 30 by receiving the support tower in the opening.

The securing assembly 1 may be lifted to its position and then fastened to the elongated support tower 30 or it may comprise means for climbing the support tower 30. The fastening module 4 comprises a rope 6 for surrounding the wind turbine tower 32. The rope 6 is to be arranged around the wind turbine tower 32. The fastening module 4 further comprises at least one arm 8 comprising an inner portion 8a attached to the base part 2 and an outer portion 8b comprising a rope sliding element 10 arranged to slidably hold the rope 6. The securing assembly 1 secures the support tower 30 to the wind turbine tower 32 with the arm 8 and the rope 6. The arm 8 comprises an inner side 9a and an outer side 9b facing away from the securing assembly.

The rope sliding element 10 keeps the rope 6 in a desired vertical position with respect to the wind turbine tower 32 but allows the rope to slide in a horizontal direction. The rope sliding element 10 can be designed in many ways. For example, the rope sliding element 10 has an opening for receiving the rope 6. The rope sliding element 10 may comprise a loop for slidably receiving the rope 6. The rope sliding element 10 is thus arranged so that the rope 6 cannot fall out of it since the sides of the opening encloses the rope on all sides.

In one example, the rope sliding element 10 comprises a plate 10a being arranged such that it can adapt to the curvature of the wind turbine tower 32. The plate 10a is provided with one or more rope sliding members 10b arranged to slidably hold the rope 6 and disposed along the plate for guiding the rope 6 around the wind turbine tower 32. The rope sliding members 10b are, for example, loops along the plate 10a, which loops keep the rope 6 in its correct place. The securing assembly 1 preferably comprises a rope tightening device 12 for tightening the rope 6 when the rope surrounds the wind turbine tower 32. In this example, the rope 6 is arranged via the rope sliding element 10 such that when the rope 6 is tightened using the rope tightening device 12, the rope 6 presses the plates 10a against the wind turbine tower 32. The rope 6 ensures high contact force of the plate 10a on the wind turbine tower. The rope 6 is slidably attached to the rope sliding element 10 at the outer portion 8b of the arm. The rope 6 is guided by the rope sliding element 10.

Figure 2 shows an example of a rope 6. Each end of the rope 6 is provided with an eye end 7a, 7b. Each end of the rope 6 is provided with an opening for receiving the knobs. In this example, the openings are through holes. Alternatively, each end can be provided with recesses having openings for receiving the knobs.

The term rope is herein used for all kinds of rope and arrangements that can be used as a rope, including wire rope, chain, and a tension strap. A rope may be made of a variety of materials, such as manila, polypropylene, polyester, nylon, aramid, jute, ultra-high molecular weight polyethylene (UHMWPE) and cotton. A rope may be constructed in a variety of ways such as single-braid, plaited, twisted, double-braided, hollow and diamond-braid. Suitably, the rope is made of High Modulus PolyEthylene (HMPE) fibre, such as Dyneema^{®}.

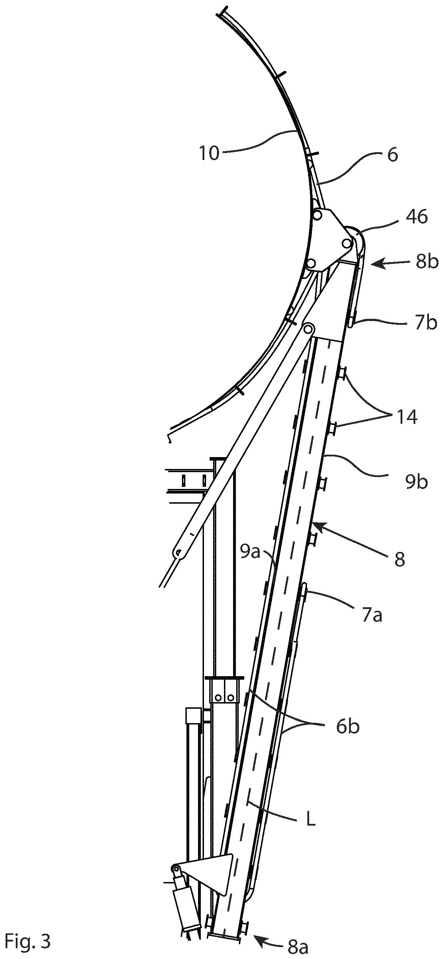

Figure 3 shows an enlarged view of the arm 8 in figure 1. The arm 8 is provided with a plurality of knobs 14 arranged spaced apart along the arm 8 for receiving the eye ends 7a, 7b of the rope and for supporting the rope. Preferably, the knobs 14 are arranged in a row along the arm 8.

In this example, the securing assembly has only one arm 8. The length of the arm 8 is at least 3 m, preferably at least 4 m, and most preferably at least 5 m. The distance between the knobs 14 is preferably between 0.3 and 0.7 m. Preferably, there is equal distance between knobs 14, i.e. the knobs 14 are arranged equidistance. However, it is also possible to have varying distance between the knobs.

In this example, the knobs 14 are arranged spaced apart along the arm 8 on two opposite sides 9a, 9b of the arm. Each of the opposite sides 9a, 9b of the arm 8 is provided with at least 3 knobs 14. Preferably, each of the opposite sides 9a, 9b is provided with at least 5 knobs 14. Most preferably, each of the opposite sides 9a, 9b is provided with at least at least 8 knobs 14. In the illustrated example, the number of knobs 14 is 10 on each side of the arm 8. However, the number of knobs 14 may vary.

In this example, the outer portion 8b of the arm is provided with a sheave 46 or a pulley. The periphery of the sheave 46 has a groove or the like for receiving the rope.

The rope tightening device 12 is used to tighten the rope 6 around the wind turbine tower 32 and thus more tightly securing the securing assembly 1 to the wind turbine tower 32. A rope tightening device 12 can be realized in many ways, for example, by using a winch or any kind of linearly moving mechanism. The moving mechanism comprises, for example, a hydraulic, pneumatic, or mechanical piston.

The rope tightening device 12 may comprise a movable element 16 arranged linearly movable back and forth with respect to the base part 2 so that the rope 6 is tightened and untightened in dependence on the movement of the movable element 16. The rope tightening device 12 comprises a mechanism 18 for moving the movable element 16 relative to the base part 2. In this example, the movable element 16 is operated by means of a hydraulic cylinder. Alternatively, the movable element 16 can be operated by means of a jack screw or the like. In this example, the movable element 16 comprises a pulley and the rope 6 is wrapped around the pulley. In this example, the rope tightening device 12 is arranged on the base part 2.

Figure 4 shows a part of the arm 8 including the knobs 14. The knobs 14 can be designed in different ways. For example, the knobs can be L-shaped to prevent the rope 6 from slipping off the knob 14. In this example, each knob 14 comprises a leg 14a and a head 14b attached to the leg 14a. The width of the head 14b is larger than the width of the leg 14a to prevent the rope 6 from slipping off the knob 14. The leg 14a is arranged perpendicular to a longitudinal direction L of the arm 8 for supporting the rope 6 when the rope 6 is arranged along the arm 8. In the illustrated example, the knobs 14 on opposite sides 9a, 9b of the arm 8 are aligned to form pairs of knobs. Each pair of knobs 14 share a common leg 14a extending between the two opposite sides 9a, 9b of the arm as shown in the figure 4. Having a common leg, increases the strength of the knobs 14 and makes it possible to handle larger forces on the rope 6. Preferably, the knobs 14 and the arm 8 are made of steel to achieve proper strength. Alternatively, the knobs 14 may comprise plates with a circular periphery provided with grooves for receiving the eye ends of the rope and for supporting the rope.

In this example, the first eye end 7b of the rope 6 is thread on one of the knobs 14 on the outer side 9b of the arm. The rope 8 is wrapped around the sheave 46 and then surrounds the wind turbine tower 32, as shown in figure 1. The excess part 6b of the rope, which is not needed for surrounding the turbine tower 32, is arranged along the inner side 9a of the arm and rests on the legs of the knobs 14 on the inner side 9a. Further, the excess part 6b of the rope continues on the outer side 9b of the arm 8 and rests on the legs of the knobs 14 on the outer side 9. The second eye end 7a of the rope 6 is threaded on one of the knobs 14 on the outer side 9b of the arm. However, which one of the knobs 14 is used for holding the eye end 7a depends on the length of the excess part 6b of the rope. If the excess part 6b of the rope is shorter, one of the knobs on the inner side 9a of the arm can be used.

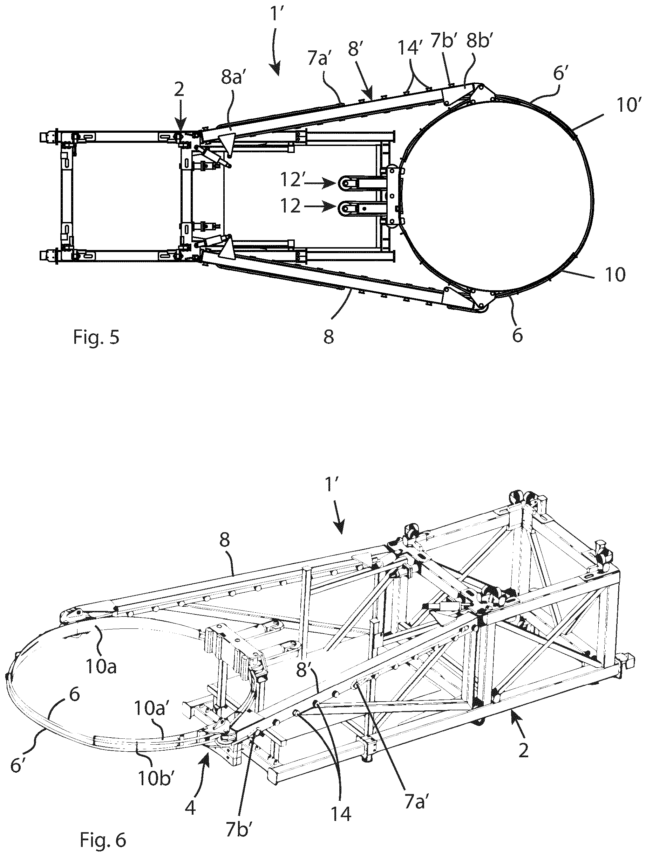

Figure 5 shows a second example of a securing assembly 1' in a view from above. Figure 6 shows the securing assembly 1' in figure 5 in a perspective view. In this example, the fastening module 4 comprises a second rope 6' provided with eye ends 7a', 7b', and a second arm 8' having an inner portion 8a' attached to the base part 2 and an outer portion 8b' comprising a rope sliding element 10' arranged to slidably hold the second rope 6'. The first and second ropes 6, 6' are used to assist the arms 8, 8' in clamping the wind turbine tower 32. An advantage of using two ropes 6, 6' is that redundancy is acquired. Thus, safety is improved, and there is no disaster if one of the ropes breaks.

Suitably, the second arm 8' is designed in the same way as the first arm 8. The first and second arms 8, 8' are arranged on opposite sides of the base part 2 for clamping the wind turbine tower 32. The second arm 8' is provided with a plurality of knobs 14' arranged space apart along the second arm for receiving the eye ends 7a', 7b' of the second rope 6' and for supporting the second rope. In this example, each of the two opposite sides of the second arm 8' is provided with a row of spaced apart knobs 14' arranged along the arm 8' for receiving the eye ends 7a', 7b' of the second rope 6' and for supporting the rope. In the same way, each of the two opposite sides 9a, 9b of the first arm 8 is provided with a row of spaced apart knobs 14 arranged along the arm 8 for receiving the eye ends 7a, 7b of the first rope 6.

In this example, the rope sliding element 10' comprises a plate 10a' being arranged such that it can adapt to the curvature of the wind turbine tower 32. The plate 10a' is provided with one or more rope sliding members 10b' arranged to slidably hold the second rope 6' and disposed along the plate for guiding the rope 6' around the wind turbine tower 32. The rope sliding members 10b' are, for example, loops arranged along the plate 10a'. The second rope 6' is slidably attached to the rope sliding element 10' at the outer portion of the second arm 8'. The second rope 8' is guided by the rope sliding element 10'.

Preferably, the securing assembly 1' comprises a second rope tightening device 12'. The second rope tightening device 12' is used to tighten the second rope 6' around the wind turbine tower 32 and thus more tightly secure the securing assembly 1' to the wind turbine tower 32. In this example, the second rope 6' is arranged via the rope sliding element 10' such that when the second rope 6' is tightened using the second rope tightening device 12', the second rope 6' presses the plate 10a' against the wind turbine tower 32. The ropes 6, 6' ensure a high contact force between the plates 10a, 10a' and the wind turbine tower 32. This securing assembly 1' allows for securing the elongated support tower 30 to the wind turbine tower 32 by clamping the wind turbine tower 32 with the two arms 8, 8' and holding it with the ropes 6, 6'. The securing assembly 1' is thus securing the elongated support tower 30 to the wind turbine tower 32 with both the arms 8, 8', and with both the ropes 6, 6'.

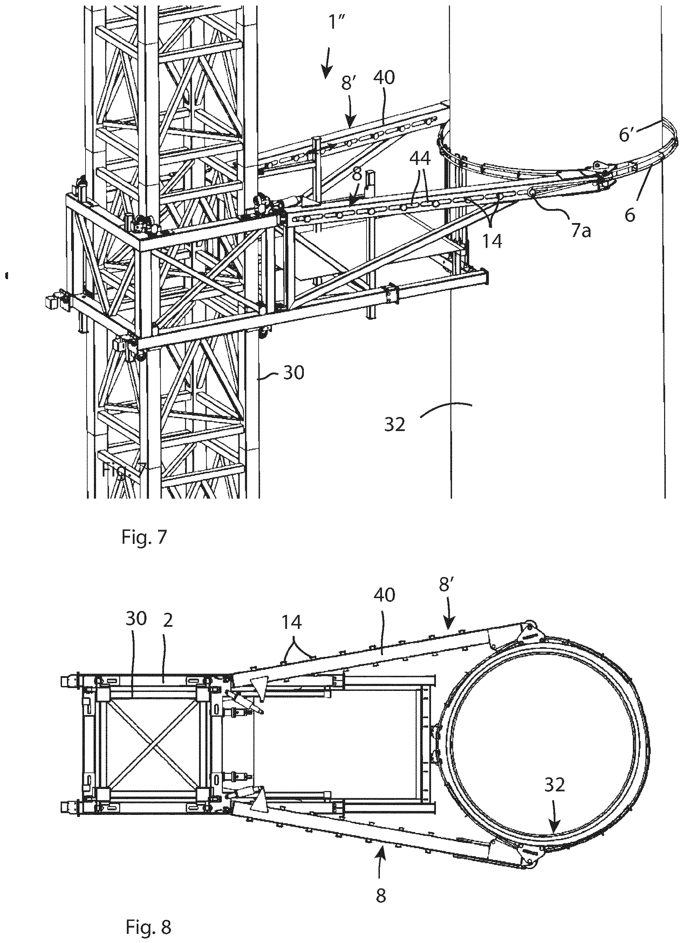

Figure 7 shows a third example of a securing assembly 1" in a perspective view. Figure 8 shows the securing assembly 1" in a view from above. In this example, the knobs 14, are movably attached to the arms 8 so that the knobs 14 are movable relative to the arms 8 in the longitudinal direction L of the arm. The arm 8 comprises an envelope 40 defining an interior space of the arm 8. The envelope 40 is provided with openings 44 designed so that the knobs 14 protrude through the openings 44. Each knob 14 has a corresponding opening 44 in the envelope 40. In this example, the openings 44 are elongated in the longitudinal direction L of the arm 8 to allow the knobs to be moved relative to the envelope 40 of the arm 8 in the longitudinal direction L of the arm. The width of the openings 44 defines the distance that the knobs can be moved. Thus, the knobs 14 can be used to stretch the rope 6. The knobs 14 can be moved away from the rope sliding element 10 after the eye ends 7a, 7b of the rope 6 have been put on the knobs so that the rope 6 is tightened. The rope 6 can be untightened by moving the knobs 14 closer to the rope sliding element 10. In this example, the securing assembly 1" comprises two arms 8, 8'. Both arms 8, 8' is designed in the same way with the knobs 14, 14' movably attached to the arms 8, 8' so that the knobs 14, 14' are movable relative to the arms 8, 8' in the longitudinal direction L of the arms. Both arms 8, 8' are provided with openings 44 designed so that the knobs 14, 14' protrude through the openings 44.

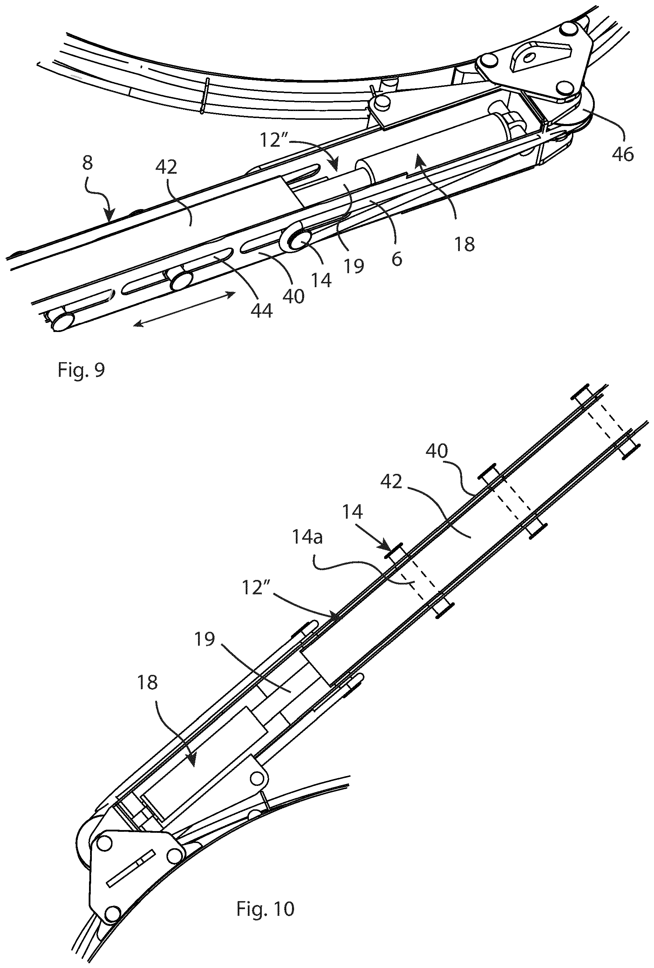

Figure 9 shows a part of the interior space in the arm 8 of the third example of the securing assembly in a perspective view. Figure 10 shows the part of the interior space in the arm 8 of the third example of the securing assembly in a view from above. The arm 8 comprises an envelope 40 defining an interior space of the arm, and an elongated member 42 disposed in the interior space of the arm. The knobs 14 are attached to the elongated member 42. The knobs 14 protrude through the openings 44 in the envelope 40. The elongated member 42 increases the strength of the knobs and makes it possible to handle larger forces on the rope. Preferably, the elongated member 42, the envelope 40 and the knobs 14 are made of steel or a similar high strength material.

In this example, the envelope 40 has a rectangular cross-section. However, the envelope can have other cross-sectional shapes, such as elliptic or circular. Preferably, the elongated member 42 has a cross-sectional shape corresponding to the cross-sectional shape of the envelope 40. Thus, in this example, the elongated member 42 has a rectangular shape.

In one example, such as the first and second examples previously described the elongated member 42 is fixedly attached to the envelope 40. In the third example, the openings 44 are elongated in the longitudinal direction of the arm 8, and the elongated member 42 is arranged movable back and forth with respect to the envelope 40 of the arm 8 so that the knobs 14 are movable along the openings 44 in the longitudinal direction of the arm 8. Since the envelop 40 of the arm 8 is fixed with respect to the base part 2, the elongated member 42 is linearly movable back and forth with respect to the base part so that the rope 6 is tightened and untightened in dependence on the movement of the elongated member 42. Thus, the rope 6 can be tightened and untightened by moving the elongated member 42 inside the arm. In this example, the rope tightening device 12, 12' of the first and second examples is substituted by a rope tightening device 12" arranged inside the arm 8. In this example, the elongated member 42 provided with the knobs 14 defines the movable element of the rope tightening device 12". The rope tightening device 12" comprises the elongated member 42 provided with the knobs and a mechanism 18 for moving the elongated member 42 relative to the arm 8. The mechanism 18 is also arranged inside the envelope 40 of the arm 8. Thus, the envelope 40 protects the mechanism 18 for moving the elongated member 42. The mechanism 18 for moving the elongated member is, for example, a hydraulic piston or a screw jack. In this example, the mechanism 18 comprises a hydraulic cylinder 19 and a hydraulic actuator for moving the cylinder 19. The elongated member 42 can also be moved relative to the envelop 40 by other means, such as a rack and pinion arrangement or any kind of mechanism, which provides a linear guiding system.

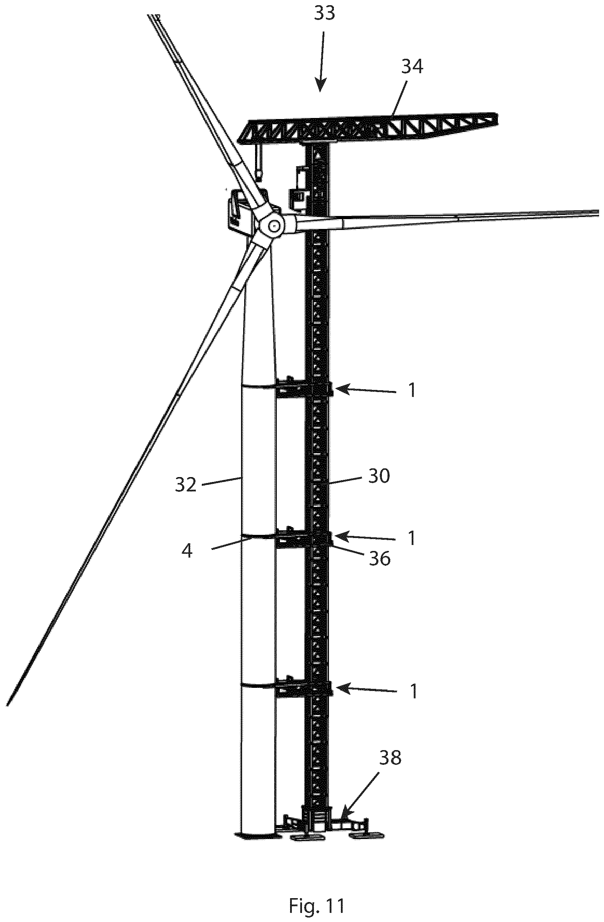

Figure 11 shows an example of a lifting system 33 including a securing assembly according to the invention. The lifting system 33 is disposed next to a wind turbine tower 32. The lifting system 33 is used for performing work on the wind turbine tower 32, such as mounting the wind turbine tower. The lifting system 33 comprises an elongated vertical support tower 30, a jib 34 arranged on top of the support tower 30 for lifting components to the wind turbine tower 32. The lifting system 33 further comprises a plurality of securing assemblies 1 for securing the support tower 30 to the wind turbine tower 32. Each of the securing assemblies 1 comprises a tower holding part 36 that holds the securing assemblies 1 to the support tower 30 and a fastening module 4 for securing the securing assemblies 1 to the wind turbine tower 32. The securing assemblies can be any of the securing assemblies 1, 1',1" previously described.

The elongated vertical support tower 30 is formed by stacked tower segments. The support tower 30 in the illustrated example is secured to the wind turbine tower 32 with three securing assemblies 1. The jib 34 is arranged on top of the support tower 30 for lifting parts to the wind turbine tower 32 and at the bottom is a base frame 38 for stabilizing the tower at its base. The term jib is defined as the projecting arm of a crane.

The present invention is not limited to the embodiments disclosed but may be varied and modified within the scope of the following claims. For example, the arm can be provided with knobs on only one side of the arm. The knobs can be designed in many ways. For example, the knobs can be L-shaped.

### Reference list

1, 1', 1" securing assembly
2 base part
4 fastening module
6 first rope
6b excess part of the rope
6' second rope
7a, 7b, 7a', 7b' eye ends
8 first arm
8' second arm
8a, 8a' inner portion of the arm
8b, 8b' outer portion of the arm
9a inner side of the arm
9b outer side of the arm
10, 10' rope sliding element
10a, 10a' plate
10b, 10b' rope sliding member
12, 12', 12" rope tightening device
14, 14' knobs
14a leg
14b head
16 movable element of the rope tightening device
17 elongated member
18 mechanism
19 hydraulic cylinder
30 support tower
32 wind turbine tower
33 Lifting system
34 jib
36 tower holding part
38 base frame
40 envelope of the arm
42 elongated member
44 openings of the envelope
46 sheave
L longitudinal direction of the arm

## Claims

1. A securing assembly (1; 1'; 1") for securing a support tower (30) to a wind turbine tower (32), the securing assembly comprises a base part (2) and a fastening module (4) for securing the support tower to the wind turbine tower, wherein the fastening module (4) comprises a rope (6) for surrounding the wind turbine tower, and an arm (8) comprising an inner portion (8a) attached to the base part (2) and an outer portion (8b) provided with a rope sliding element (10) arranged to slidably hold the rope (6), **characterized in that** each end of the rope (6) is provided with an eye end (7a, 7b), and the arm (8) is provided with a plurality of knobs (14) arranged spaced apart along the arm (8) for receiving the eye ends (7a, 7b) of the rope and for supporting the rope.

2. The securing assembly according to claim 1, wherein each knob (14) comprises a leg (14a) for supporting the rope when the rope is arranged along the arm, and the leg (14a) is provided with a protruding part (14b) that prevents the eye ends (7a, 7b) from slipping off the knob.

3. The securing assembly according to claim 1 or 2, wherein the knobs (14) are arranged spaced apart along the arm (8) on two opposite sides (9a, 9b) of the arm.

4. The securing assembly according to claim 2 and 3, wherein the knobs (14) on opposite sides (9a, 9b) of the arm (8) are aligned to form pairs of knobs, and each pair of knobs share a common leg (14a) extending between the two opposite sides (9a, 9b) of the arm (8).

5. The securing assembly according to any of the previous claims, wherein the knobs (14) are movably attached to the arm (8) so that the knobs (14) are movable relative to the arm (8) in the longitudinal direction (L) of the arm.

6. The securing assembly according to any of the previous claims, wherein the arm (8) comprises an envelope (40) defining an interior space of the arm, and an elongated member (42) disposed in the interior space of the arm, wherein the knobs (14) are attached to the elongated member (42), and the envelope (40) is provided with openings (44) designed so that the knobs (14) protrude through the openings (44).

7. The securing assembly according to claim 6, wherein said openings (44) are elongated in the longitudinal direction (L) of the arm (8), and the elongated member (42) is arranged movable relative to the envelope (40) in the longitudinal direction of the arm.

8. The securing assembly according to claim 3, wherein each of said opposite sides of the arm (8, 8') is provided with at least 3 knobs (14), preferably at least 5 knobs (14), and most preferably at least 8 knobs (14).

9. The securing assembly according to any of the previous claims, wherein the distance between the knobs (14) is between 0.3 and 0.7 m.

10. The securing assembly according to any of the previous claims, wherein the length of the arm (8, 8') is at least 3 m, preferably at least 4 m, and most preferably at least 5 m.

11. The securing assembly according to any of the previous claims, wherein the fastening module (4) comprises a second rope (6') provided with eye ends (7a', 7b'), and a second arm (8') having an inner portion (8a') attached to the base part (2) and an outer portion (8b') comprising a rope sliding element (10') arranged to slidably hold the second rope (6'), the first and second arms (8, 8') are arranged on opposite sides of the base part (2) for clamping the wind turbine tower, and the second arm (8') is provided with a plurality of knobs (14') arranged space apart along the second arm for receiving the eye ends (7a',7b') of the second rope (6') and for supporting the second rope.

12. The securing assembly according to any of the previous claims, comprising a rope tightening device (12, 12'; 12") for tightening the rope (6) when the rope surrounds the wind turbine tower, wherein the rope tightening device (12, 12'; 12") comprises a movable element (16; 17) arranged linearly movable back and forth with respect to the base part (2) so that the rope (6) is tightened and untightened in dependence on the movement of the movable element (16).

13. The securing assembly according to claim 12, wherein said movable element (17) is disposed inside the arm (8) and is arranged movable relative to the arm in the longitudinal direction of the arm.

14. The securing assembly according to claim 7 and 13, wherein said movable element (17) is said elongated member (17).

15. A lifting system comprising a support tower (30), a jib (34) arranged on top of the support tower for lifting components to a wind turbine tower (32), and a plurality of securing assemblies (1, 1',1") for securing the support tower (30) to the wind turbine tower (32), wherein each of the securing assemblies (1, 1',1") comprises a tower holding part (36) that holds the securing assemblies to the support tower and a fastening module for securing the securing assemblies to the wind turbine tower, **characterized in that** the securing assemblies comprise at least one securing assembly (1, 1',1") according to any of the claims 1 - 14.

## Patentansprüche

1. Sicherungsbaugruppe (1; 1'; 1") zum Sichern eines Stützturms (30) an einem Windkraftturm (32), wobei die Sicherungsbaugruppe ein Basisteil (2) und ein Befestigungsmodul (4) zum Sichern des Stützturms an dem Windkraftturm, wobei das Befestigungsmodul (4) ein Seil (6) zum Umschließen des Windkraftturms umfasst, und einen Arm (8) umfasst, umfassend einen inneren Abschnitt (8a), der an dem Basisteil (2) angebracht ist, und einen äußeren Abschnitt (8b), der mit einem Seilgleitelement (10) versehen ist, das eingerichtet ist, um das Seil (6) gleitend zu halten, **dadurch gekennzeichnet, dass** jedes Ende des Seils (6) mit einem Ösenende (7a, 7b) versehen ist und der Arm (8) mit einer Vielzahl von Noppen (14) versehen ist, die entlang des Arms (8) beabstandet eingerichtet sind, zum Aufnehmen der Ösenenden (7a, 7b) des Seils und zum Stützen des Seils.

2. Sicherungsbaugruppe nach Anspruch 1, wobei jede Noppe (14) einen Schenkel (14a) zum Stützen des Seils umfasst, wenn das Seil entlang des Arms eingerichtet ist, und der Schenkel (14a) mit einem hervorstehenden Teil (14b) versehen ist, der verhindert, dass die Ösenenden (7a, 7b) von der Noppe rutschen.

3. Sicherungsbaugruppe nach Anspruch 1 oder 2, wobei die Noppen (14) entlang des Arms (8) auf zwei gegenüberliegenden Seiten (9a, 9b) des Arms beabstandet eingerichtet sind.

4. Sicherungsbaugruppe nach Anspruch 2 und 3, wobei die Noppen (14) auf gegenüberliegenden Seiten (9a, 9b) des Arms (8) ausgerichtet sind, um Noppenpaare auszubilden, und jedes Noppenpaar einen gemeinsamen Schenkel (14a) teilen, der sich zwischen den zwei gegenüberliegenden Seiten (9a, 9b) des Arms (8) erstreckt.

5. Sicherungsbaugruppe nach einem der vorstehenden Ansprüche, wobei die Noppen (14) an dem Arm (8) beweglich angebracht sind, so dass die Noppen (14) relativ zu dem Arm (8) in der Längsrichtung (L) des Arms beweglich sind.

6. Sicherungsbaugruppe nach einem der vorstehenden Ansprüche, wobei der Arm (8) eine Hülle (40), die einen Innenraum des Arms definiert, und ein längliches Bauteil (42) umfasst, das in dem Innenraum des Arms angeordnet ist, wobei die Noppen (14) an dem länglichen Bauteil (42) angebracht sind und die Hülle (40) mit Öffnungen (44) versehen ist, die gestaltet sind, so dass die Noppen (14) durch die Öffnungen (44) hervorstehen.

7. Sicherungsbaugruppe nach Anspruch 6, wobei die Öffnungen (44) in der Längsrichtung (L) des Arms (8) länglich sind und das längliche Bauteil (42) relativ zu der Hülle (40) in der Längsrichtung des Arms beweglich eingerichtet ist.

8. Sicherungsbaugruppe nach Anspruch 3, wobei jede der gegenüberliegenden Seiten des Arms (8, 8') mit mindestens 3 Noppen (14), vorzugsweise mindestens 5 Noppen (14) und am meisten bevorzugt 8 Noppen (14) versehen ist.

9. Sicherungsbaugruppe nach einem der vorstehenden Ansprüche, wobei der Abstand zwischen den Noppen (14) zwischen 0,3 und 0,7 m beträgt.

10. Sicherungsbaugruppe nach einem der vorstehenden Ansprüche, wobei die Länge des Arms (8, 8') mindestens 3 m, vorzugsweise mindestens 4 m und am meisten bevorzugt mindestens 5 m beträgt.

11. Sicherungsbaugruppe nach einem der vorstehenden Ansprüche, wobei das Befestigungsmodul (4) ein zweites Seil (6'), das mit Ösenenden (7a', 7b') versehen ist, und einen zweiten Arm (8') umfasst, der einen inneren Abschnitt (8a'), der an dem Basisteil (2) angebracht ist, und einen äußeren Abschnitt (8b') aufweist, umfassend ein Seilgleitelement (10'), das eingerichtet ist, um das zweite Seil (6') gleitend zu halten, wobei der erste und der zweite Arm (8, 8') auf gegenüberliegenden Seiten des Basisteils (2) eingerichtet sind, zum Klemmen des Windkraftturms, und wobei der zweite Arm (8') mit einer Vielzahl von Noppen (14') versehen ist, die entlang des zweiten Arms beabstandet eingerichtet sind, zum Aufnehmen der Ösenenden (7a', 7b') des zweiten Seils (6') und zum Stützen des zweiten Seils.

12. Sicherungsbaugruppe nach einem der vorstehenden Ansprüche, umfassend eine Seilspannvorrichtung (12, 12'; 12") zum Spannen des Seils (6), wenn das Seil den Windkraftturm umgibt, wobei die Seilspannvorrichtung (12, 12'; 12") ein bewegliches Element (16; 17) umfasst, das in Bezug auf das Basisteil (2) linear hin- und her beweglich eingerichtet ist, so dass das Seil (6) in Abhängigkeit von der Bewegung des beweglichen Elements (16) gespannt und entspannt wird.

13. Sicherungsbaugruppe nach Anspruch 12, wobei das bewegliche Element (17) innerhalb des Arms (8) angeordnet ist und relativ zu dem Arm in der Längsrichtung des Arms beweglich eingerichtet ist.

14. Sicherungsbaugruppe nach Anspruch 7 und 13, wobei das bewegliche Element (17) das längliche Bauteil (17) ist.

15. Hebesystem, umfassend einen Stützturm (30), einen Ausleger (34), der oben auf dem Stützturm eingerichtet ist, zum Heben von Komponenten auf einen Windkraftturm (32), und eine Vielzahl von Sicherungsbaugruppen (1, 1', 1") zum Sichern des Stützturms (30) an dem Windkraftturm (32), wobei jede der Sicherungsbaugruppen (1, 1', 1") ein Turmhalteteil (36), das die Sicherungsbaugruppen an dem Stützturm hält, und ein Befestigungsmodul zum Sichern der Sicherungsbaugruppen an dem Windkraftturm umfasst, **dadurch gekennzeichnet, dass** die Sicherungsbaugruppen mindestens eine Sicherungsbaugruppe (1, 1', 1") nach einem der Ansprüche 1 bis 14 umfassen.

## Revendications

1. Ensemble de fixation (1 ; 1' ; 1") permettant de fixer une tour de support (30) à une tour d'éolienne (32), l'ensemble de fixation comprend une partie de base (2) et un module de liaison (4) pour fixer la tour de support à la tour d'éolienne, dans lequel le module de liaison (4) comprend un câble (6) pour entourer la tour d'éolienne, et un bras (8) comprenant une partie interne (8a) attachée à la partie de base (2) et une partie externe (8b) pourvue d'un élément coulissant de câble (10) agencé pour maintenir de manière coulissante le câble (6), **caractérisé en ce que** chaque extrémité du câble (6) est pourvue d'un extrémité en œillet (7a, 7b), et le bras (8) est pourvu d'une pluralité de boutons (14) agencés de manière espacée les uns des autres le long du bras (8) pour recevoir les extrémités en œillet (7a, 7b) du câble et pour supporter le câble.

2. Ensemble de fixation selon la revendication 1, dans lequel chaque bouton (14) comprend une patte (14a) pour supporter le câble lorsque le câble est agencé le long du bras, et la patte (14a) est pourvue d'une partie saillante (14b) qui empêche les extrémités en œillet (7a, 7b) de glisser hors du bouton.

3. Ensemble de fixation selon la revendication 1 ou 2, dans lequel les boutons (14) sont agencés de manière espacée le long du bras (8) sur deux côtés opposés (9a, 9b) du bras.

4. Ensemble de fixation selon les revendications 2 et 3, dans lequel les boutons (14) sur des côtés opposés (9a, 9b) du bras (8) sont alignés pour former des paires de boutons, et chaque paire de boutons partage une patte commune (14a) s'étendant entre les deux côtés opposés (9a, 9b) du bras (8).

5. Ensemble de fixation selon l'une quelconque des revendications précédentes, dans lequel les boutons (14) sont attachés de manière mobile au bras (8) de sorte que les boutons (14) sont mobiles par rapport au bras (8) dans la direction longitudinale (L) du bras.

6. Ensemble de fixation selon l'une quelconque des revendications précédentes, dans lequel le bras (8) comprend une enveloppe (40) définissant un espace intérieur du bras, et un organe allongé (42) disposé dans l'espace intérieur du bras, dans lequel les boutons (14) sont attachés à l'organe allongé (42), et l'enveloppe (40) est pourvue d'ouvertures (44) conçues de sorte que les boutons (14) font saillie à travers les ouvertures (44).

7. Ensemble de fixation selon la revendication 6, dans lequel lesdites ouvertures (44) sont allongées dans la direction longitudinale (L) du bras (8), et l'organe allongé (42) est agencé de manière mobile par rapport à l'enveloppe (40) dans la direction longitudinale du bras.

8. Ensemble de fixation selon la revendication 3, dans lequel chacun desdits côtés opposés du bras (8, 8') est pourvu d'au moins 3 boutons (14), de préférence, d'au moins 5 boutons (14), et, le plus préférablement, d'au moins 8 boutons (14).

9. Ensemble de fixation selon l'une quelconque des revendications précédentes, dans lequel la distance entre les boutons (14) est comprise entre 0,3 et 0,7 m.

10. Ensemble de fixation selon l'une quelconque des revendications précédentes, dans lequel la longueur du bras (8, 8') est d'au moins 3 m, de préférence, d'au moins 4 m, et, le plus préférablement, d'au moins 5 m.

11. Ensemble de fixation selon l'une quelconque des revendications précédentes, dans lequel le module de liaison (4) comprend un second câble (6') pourvu d'extrémités en œillet (7a', 7b'), et un second bras (8') ayant une partie interne (8a') attachée à la partie de base (2) et une partie externe (8b') comprenant un élément coulissant de câble (10') agencé pour maintenir de manière coulissante le second câble (6'), le premier et le second bras (8, 8') sont agencés sur des côtés opposés de la partie de base (2) pour serrer la tour d'éolienne, et le second bras (8') est pourvu d'une pluralité de boutons (14') agencés de manière espacée les uns des autres le long du second bras pour recevoir les extrémités en œillet (7a', 7b') du second câble (6') et pour supporter le second câble.

12. Ensemble de fixation selon l'une quelconque des revendications précédentes, comprenant un dispositif de serrage de câble (12, 12' ; 12") pour tendre le câble (6) lorsque le câble entoure la tour d'éolienne, dans lequel le dispositif de serrage de câble (12, 12' ; 12") comprend un élément mobile (16 ; 17) agencé linéairement mobile d'avant en arrière par rapport à la partie de base (2) de sorte que le câble (6) est tendu et détendu en fonction du mouvement de l'élément mobile (16).

13. Ensemble de fixation selon la revendication 12, dans lequel ledit élément mobile (17) est disposé à l'intérieur du bras (8) et est agencé de manière mobile par rapport au bras dans la direction longitudinale du bras.

14. Ensemble de fixation selon les revendications 7 et 13, dans lequel ledit élément mobile (17) est ledit organe allongé (17).

15. Système de levage comprenant une tour de support (30), une flèche (34) agencée au sommet de la tour de support pour soulever des composants vers une tour d'éolienne (32), et une pluralité d'ensembles de fixation (1, 1',1") pour fixer la tour de support (30) à la tour d'éolienne (32), dans lequel chacun des ensembles de fixation (1, 1',1") comprend une partie de maintien de tour (36) qui maintient les ensembles de fixation à la tour de support et un module de liaison pour fixer les ensembles de fixation à la tour d'éolienne, **caractérisé en ce que** les ensembles de fixation comprennent au moins un ensemble de fixation (1, 1', 1") selon l'une quelconque des revendications 1 à 14.
